# EUROPEAN PATENT SPECIFICATION

(11) **EP 4 468 699 B1**
(45) Date of publication and mention of the grant of the patent: **18.11.2026**
(21) Application number: 22922183.3
(22) Date of filing: 21.12.2022
(51) Int. Cl.: H04N 13/344, G09G 3/20, G09G 3/34, G09G 5/10, G09G 5/36, H04N 13/122, H04N 13/239, H04N 13/361, H04N 13/398

(54) **DISPLAY CONTROL DEVICE, HEAD-MOUNTED DISPLAY, AND DISPLAY CONTROL METHOD**
ANZEIGESTEUERUNGSVORRICHTUNG, KOPFMONTIERTE ANZEIGE UND ANZEIGESTEUERUNGSVERFAHREN
DISPOSITIF DE COMMANDE D'AFFICHAGE, VISIOCASQUE ET PROCÉDÉ DE COMMANDE D'AFFICHAGE

(30) Priority: 19.01.2022 JP 2022006403
(43) Date of publication of application: 27.11.2024
(73) Proprietor: Sony Interactive Entertainment Inc., Tokyo 108-0075 (JP)
(72) Inventor: NISHIBE Mitsuru, Tokyo 108-0075 (JP); TOMINAGA Takehiro, Tokyo 108-0075 (JP); NAKADA Yoshihiro, Tokyo 108-0075 (JP); ITO Masaki, Tokyo 108-0075 (JP); MINAMINO Takanori, Tokyo 108-0075 (JP)
(74) Representative: Gill Jennings & Every LLP
(86) International application number: PCT/JP2022/047175
(87) International publication number: WO 2023/140033

(56) References cited:
- EP-A1- 3 919 962
- WO-A1-2018/055899
- WO-A1-2019/187801
- JP-A- 2019 062 397
- JP-A- H05 103 349
- JP-A- H09 107 563
- US-A1- 2019 228 729

## Description

### [Technical Field]

The present invention relates to a display control device that controls display of an image, a head-mounted display that displays an image, and a display control method to be performed therein.

### [Background Art]

Image display systems for allowing a subject space to be viewed from a free viewpoint have become widespread. For example, there has been developed a system for displaying a panoramic image on a head-mounted display in such a manner as to display an image according to a visual line direction of a user wearing the head-mounted display. Use of a head-mounted display can enhance a feeling of immersion into images or can improve operability of an application of a game or the like.

Moreover, a technology of providing a video camera for photographing a real space to a head-mounted display and realizing mixed reality by superimposing computer graphics on the photographed image has been put to practical use. For example, PTL 1 discloses a technology of generating a mixed-reality image by using a frame obtained by thinning-out from a photographed video and then displaying the image for a long period, so that an amount of data to be processed is reduced. Previously known arrangements are disclosed in US 2019/228729, EP 3919962, and JP 2019 062397.

### [Citation List][Patent Literature]

[PTL 1] Japanese Patent Laid-open No. 2019-62397

### [Summary]

### [Technical Problems]

To display an image with a visual field corresponding to a visual line direction of a user, display with a reduced delay is required to follow the user's motion. Meanwhile, to achieve a high image quality by increasing the resolution or frame rate of images, data sizes of images to be processed become large. As a result, processing loads are increased or a communication band becomes tight. Accordingly, a delay until the display is performed is likely to occur. Power consumption is also affected by an increase of the processing loads. Particularly in a head-mounted display, a duration time period of a chargeable battery can be shortened, or the wearing feel can be deteriorated due to heat generation. The present invention has been made in view of the problems described above, and an object thereof is to provide an image display technology using a head-mounted display such that image processing loads can be reduced while the quality of a user experience is maintained.

### [Solution to Problems]

In order to solve the problems described above, a certain aspect of the present invention relates to a display control device according to claim 1.

Another aspect of the present invention relates to a head-mounted display according to claim 11.

Still another aspect of the present invention relates to a display control method according to claim 13.

### [Advantageous Effect of the Invention]

According to the present invention, in an image display technology using a head-mounted display, image processing loads can be reduced while the quality of a user experience is maintained.

### [Brief Description of Drawings]

[FIG. 1]

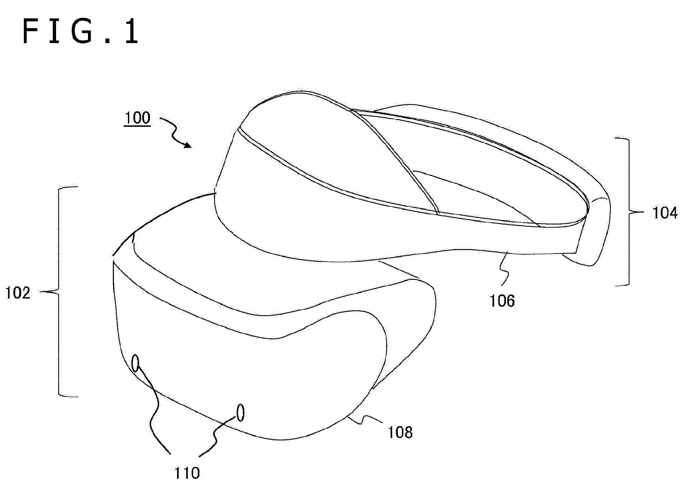

   FIG. 1 is a diagram depicting an example of an appearance of a head-mounted display according to the present embodiment.
[FIG. 2]

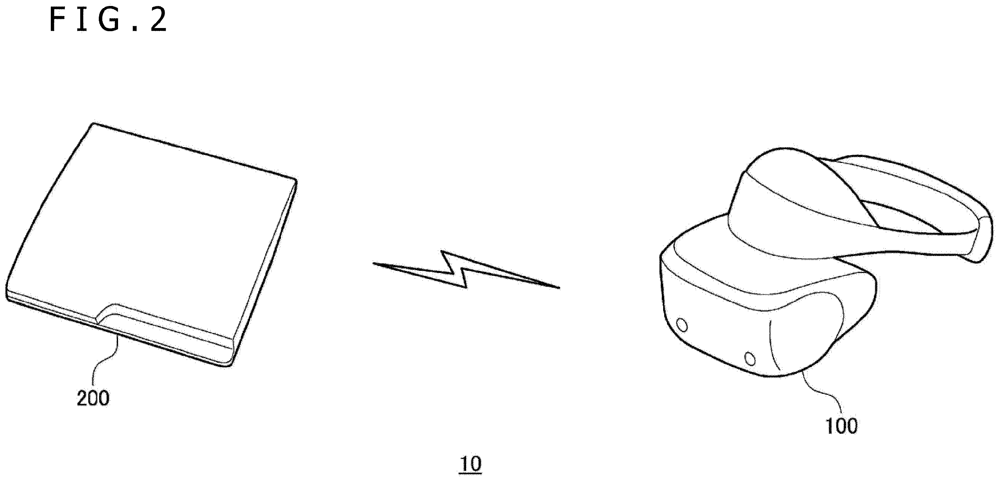

   FIG. 2 is a configuration example of an image display system according to the present embodiment.
[FIG. 3]

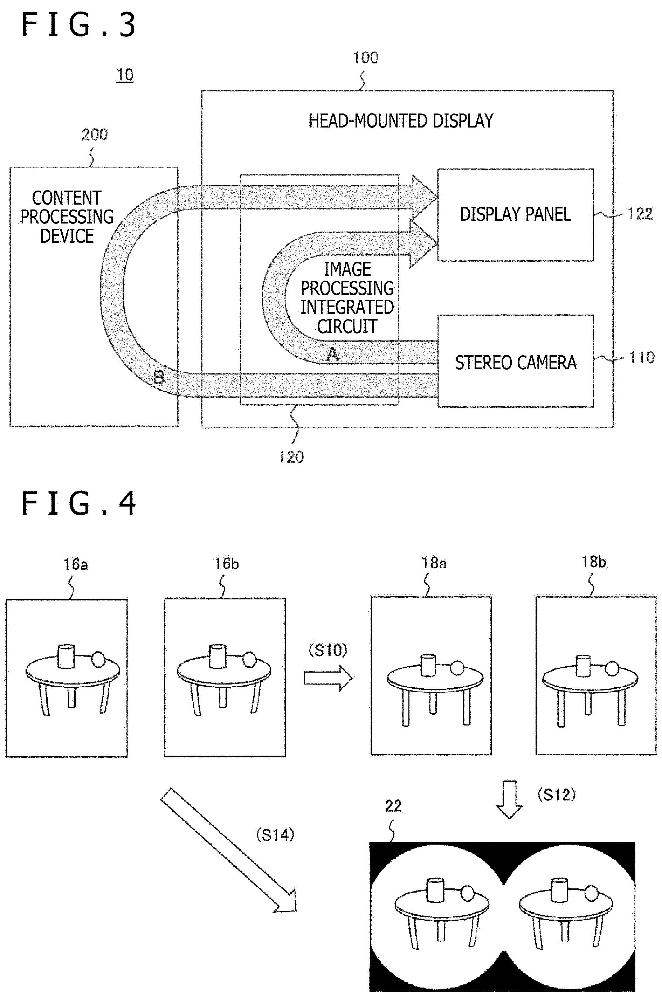

   FIG. 3 is a diagram schematically depicting data paths in the image display system according to the present embodiment.
[FIG. 4]
   FIG. 4 is a diagram for explaining a process of generating a display image from a photographed image in the present embodiment.
[FIG. 5]

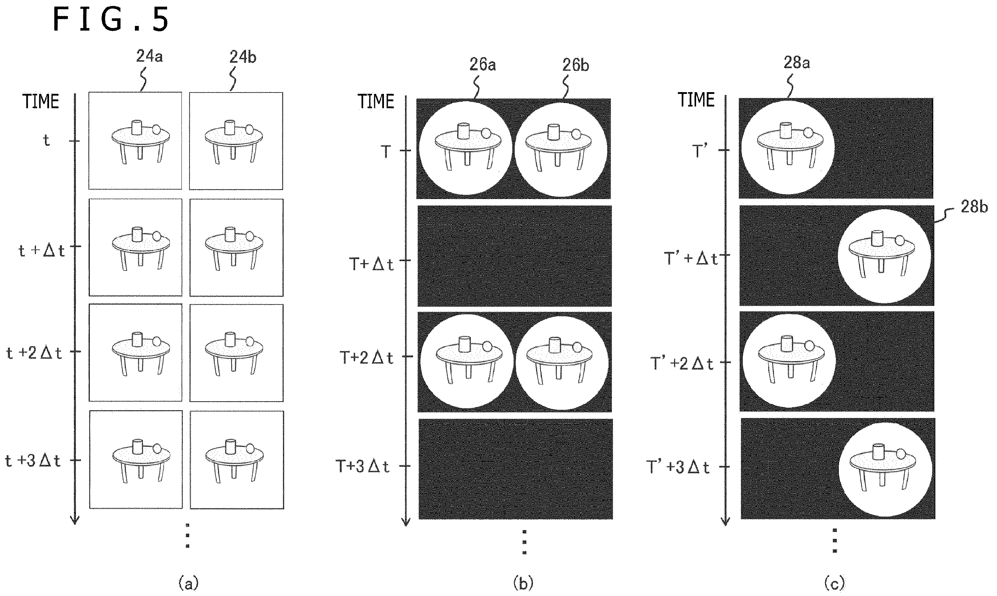

   FIG. 5 is a diagram for explaining a manner of alternately displaying a left-eye image and a right-eye image in the present embodiment.
[FIG. 6]

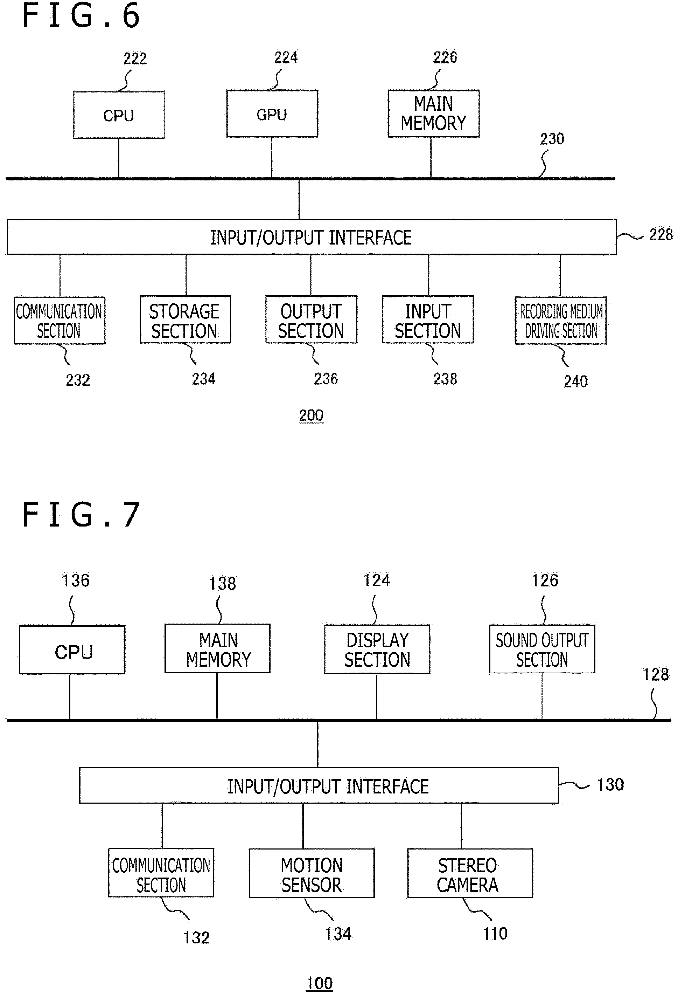

   FIG. 6 is a diagram depicting an internal circuit configuration of a content processing device in the present embodiment.
[FIG. 7]
   FIG. 7 is a diagram depicting an internal circuit configuration of the head-mounted display in the present embodiment.
[FIG. 8]

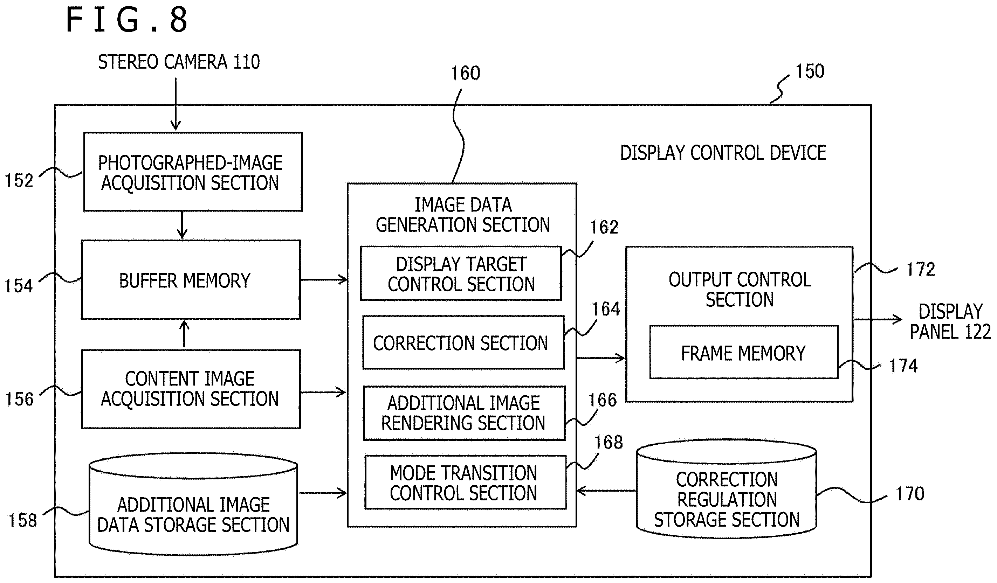

   FIG. 8 is a diagram depicting a configuration of functional blocks of a display control device in the present embodiment.
[FIG. 9]

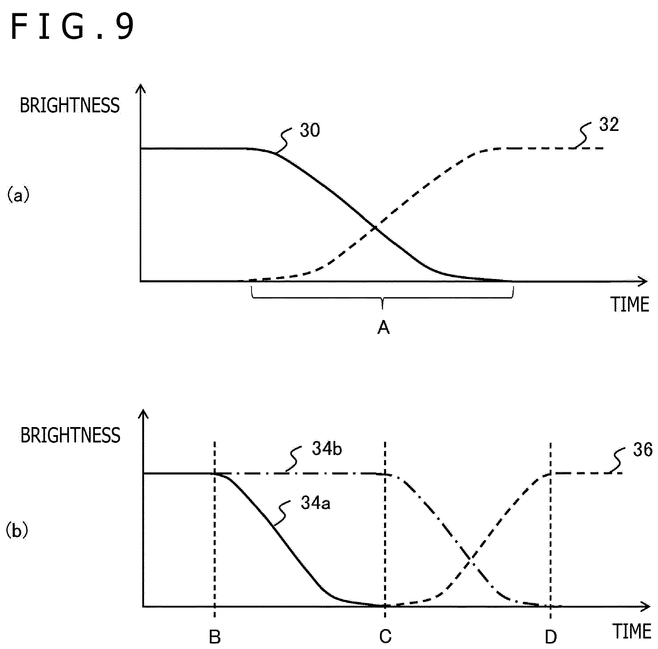

   FIG. 9 is a diagram for explaining a method of cross-fading performed by a mode transition control section in the present embodiment.
[FIG. 10]

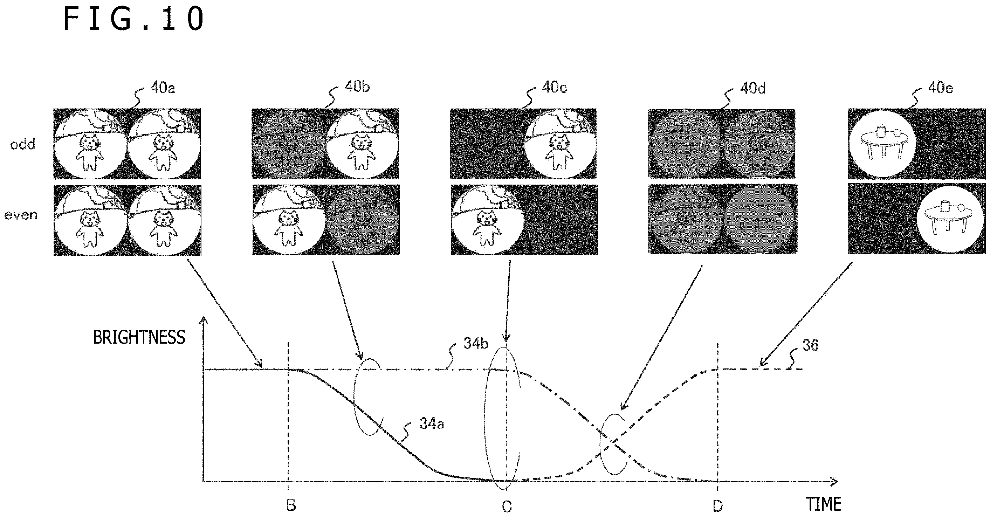

   FIG. 10 is a diagram schematically depicting a transition of display images that occurs when a brightness change depicted in (b) of FIG. 9 is given.
[FIG. 11]

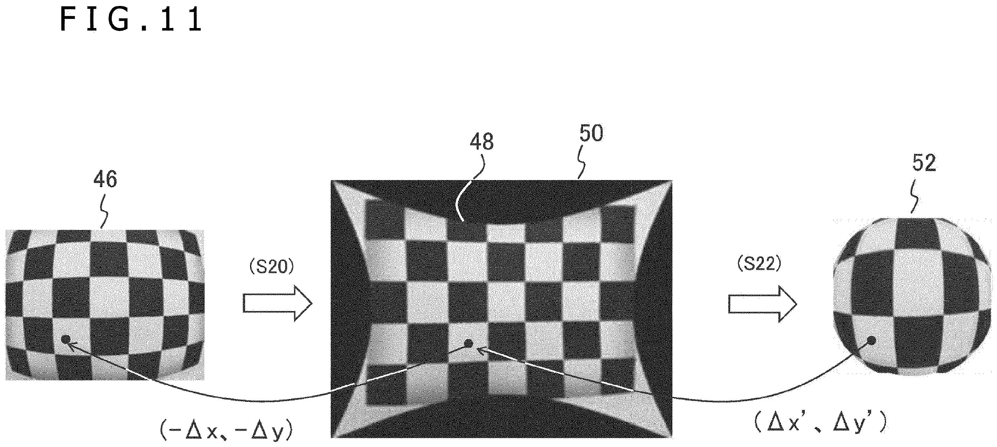

   FIG. 11 is a diagram depicting an example of a general processing procedure of generating a display image from a photographed image.
[FIG. 12]

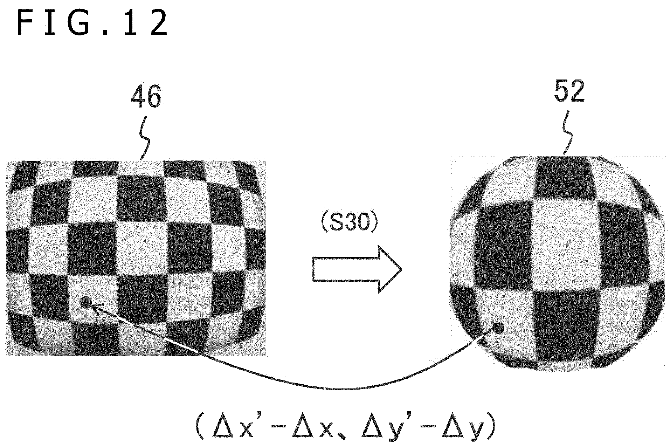

   FIG. 12 is a diagram depicting a processing procedure in which a correction section generates a display image from a photographed image in the present embodiment.
[FIG. 13]

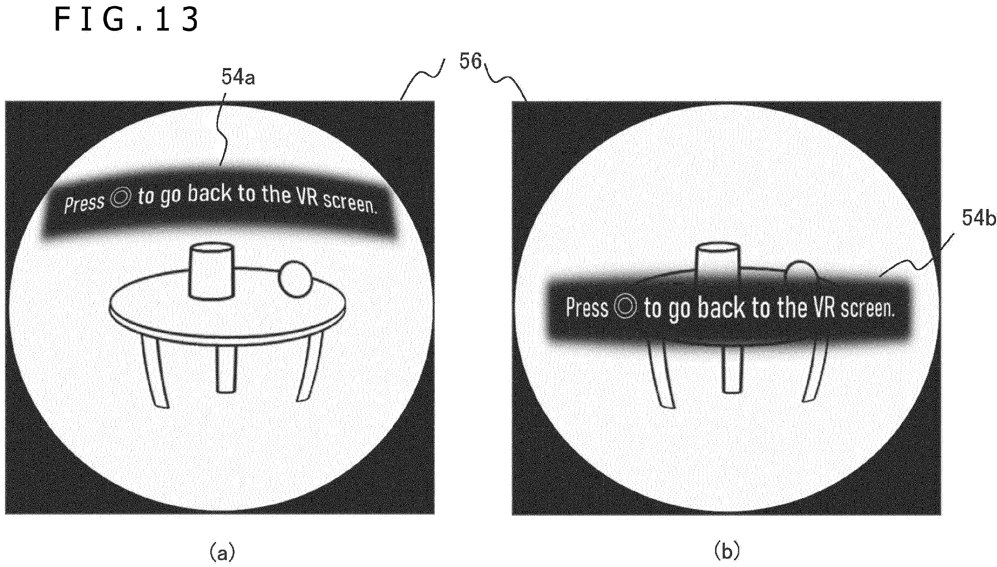

   FIG. 13 is a diagram schematically depicting states in which an additional image rendering section superimposes an additional image on a display image in the present embodiment.
[FIG. 14]

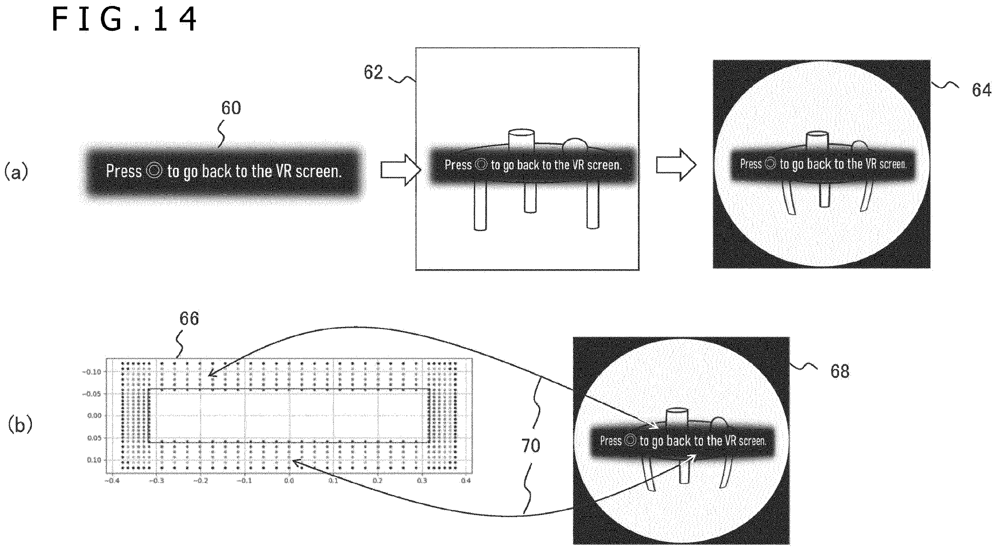

   FIG. 14 is a diagram for explaining a method in which the additional image rendering section efficiently renders an additional image in the present embodiment.

### [Description of Embodiment]

FIG. 1 illustrates an example of an appearance of a head-mounted display 100. In this example, the head-mounted display 100 includes an output structure part 102 and a fitting structure part 104. The fitting structure part 104 includes a fitting band 106 that surrounds the head of a user when worn by the user and that thus fixes the device. The output structure part 102 includes a casing 108 that is shaped to cover the left and right eyes of the user wearing the head-mounted display 100. A display panel that directly faces the eyes of the user wearing the head-mounted display 100 is included in the casing 108.

Further, an eyepiece lens that is positioned between the display panel and the eyes of the user wearing the head-mounted display 100 and that provides an enlarged image is included in the casing 108. In addition, the head-mounted display 100 may further include a loudspeaker or an earphone at a position that corresponds to an ear of the user wearing the head-mounted display 100. In addition, the head-mounted display 100 may include a motion sensor. The motion sensor may detect a translation movement or a rotational movement of the head of the user wearing the head-mounted display 100 and further detect the position and posture thereof at each time.

The head-mounted display 100 further includes a stereo camera 110 on a front surface of the casing 108. The present embodiment provides a mode in which a video being photographed by the stereo camera 110 is displayed with a minimal delay such that the user can view a real space in a direction that the user is facing as it is. This mode is referred to as a "see-through mode" hereinbelow. For example, the head-mounted display 100 automatically enters the see-through mode when any content image is not displayed.

Accordingly, without taking off the head-mounted display 100, the user can confirm states of the surroundings before content is started, after content is ended, or when content is halted, for example. Besides, the see-through mode may be started or stopped when the user clearly performs an operation. Accordingly, even when viewing the content, the user can temporarily switch the content image to an image of the real space at a desired timing, so that the user can perform a necessary operation of, for example, coping with an emergency event in the real space. It is to be noted that, while the stereo camera 110 illustrated in FIG. 1 is disposed on a lower portion of the front surface of the casing 108, the position of the stereo camera 110 is not limited to a particular position. In addition, any camera other than the stereo camera 110 may be provided.

An image photographed by the stereo camera 110 can also be used as a content image. For example, a virtual object is displayed in an overlaid manner on the photographed image in such a way that the position, posture, and motion of the virtual object are adjusted to those of a real object existing within the visual field of the camera. In this manner, augmented reality (AR) or mixed reality (MR) can be implemented. Moreover, irrespective of whether the photographed image is displayed or not, the photographed image may be analyzed, and the analysis result may be used to determine the position, posture, and motion of an object to be rendered.

For example, by applying stereo matching on the photographed image, corresponding points of a silhouette image of a subject may be extracted, and the distance to the subject may be obtained according to the principle of triangulation. Alternatively, the position and posture of the head-mounted display 100 or the user's head with respect to the surrounding space may be obtained by a well-known technology such as visual simultaneous localization and mapping (visual SLAM). As a result of the processes described above, a virtual world can be rendered and displayed with a visual field that is adjusted to a viewpoint position or a visual line direction of the user.

FIG. 2 illustrates a configuration example of an image display system according to the present embodiment. In an image display system 10, the head-mounted display 100 is connected to a content processing device 200 via wireless communication or via an interface such as USB type-C for establishing connection with a peripheral device. The content processing device 200 may further be connected to a server over a network. In this case, the server may provide the content processing device 200 with an online application such as a game that a plurality of users can participate in over the network.

The content processing device 200 is basically an information processing device that generates a display image by processing content and that transmits the generated display image to the head-mounted display 100 to cause the head-mounted display 100 to display the display image. The content processing device 200 typically identifies the viewpoint position and the visual line direction on the basis of the position and posture of the head of the user wearing the head-mounted display 100, and generates a display image with the visual field corresponding to the identified viewpoint position and visual line direction. For example, the content processing device 200 generates an image expressing a virtual world which is a stage in an electronic game while proceeding with the game, so that virtual reality (VR) is implemented.

Content to be processed by the content processing device 200 in the present embodiment is not limited to any specific kind. AR or MR may be implemented as described above, or a movie display images of which are previously prepared may be processed. In the following explanation, a "content image" refers to an image that is not a realtime image of a real space displayed in the see-through mode, and is used for comparison.

FIG. 3 schematically depicts data paths in the image display system 10 according to the present embodiment. The head-mounted display 100 includes the stereo camera 110 and a display panel 122 as previously described. The display panel 122 is a panel having a common display mechanism such as a liquid crystal display or an organic EL display. In the present embodiment, the display panel 122 displays a left-eye image and a right-eye image, which constitute a frame of a video, in a left region and a right region directly facing the left eye and the right eye of the user, respectively.

Stereo images having a parallax corresponding to the distance between the left and right eyes are used as the left-eye image and the right-eye image. Accordingly, a display target can three-dimensionally be viewed. The display panel 122 may include two panels, i.e., a left-eye panel and a right-eye panel which are disposed side by side, or may include one panel that displays an image obtained by connecting a left-eye image and a right-eye image in a left-right direction.

The head-mounted display 100 further includes an image processing integrated circuit 120. For example, the image processing integrated circuit 120 is a system-on-chip having a variety of functional modules including a CPU mounted thereon. It is to be noted that the head-mounted display 100 may further include, for example, the above-described motion sensor such as a gyro sensor, an acceleration sensor, or an angular acceleration sensor, a main memory such as a dynamic random access memory (DRAM), an audio circuit for allowing the user to hear sound, or a peripheral device interface circuit for establishing connection with a peripheral device, which are not illustrated in FIG. 3.

In FIG. 3, two possible data paths for a case where an image photographed by the stereo camera 110 is displayed are indicated by arrows. To implement AR or MR, it is general to import an image photographed by the stereo camera 110 into a content processing subject and combine the image with a virtual object in the subject to generate a display image. In the image display system 10 illustrated in FIG. 3, the content processing subject is the content processing device 200. Therefore, an image photographed by the stereo camera 110 is transmitted to the content processing device 200 through the image processing integrated circuit 120 as indicated by an arrow B.

Then, for example, a virtual object is superimposed on the image, and the resultant image is returned to the head-mounted display 100 and is displayed on the display panel 122. On the other hand, in the see-through mode, after the image processing integrated circuit 120 correcting an image photographed by the stereo camera 110, to be suitable for display, the corrected image can be displayed on the display panel 122, as indicated by an arrow A. The path indicated by the arrow A has a data transmission path length much shorter than the length of the path indicated by the arrow B. Thus, along the path indicated by the arrow A, a time period between image capturing to image displaying can be shortened, and further, power consumption required for data transmission can be reduced.

However, the present embodiment is not intended to limit the data path in the see-through mode to the one indicated by the arrow A. That is, the path indicated by the arrow B may be adopted to transmit an image photographed by the stereo camera 110 to the content processing device 200. Then, the image may be corrected to be a display image at the content processing device 200, and then, the display image may be returned to the head-mounted display 100 and be displayed.

FIG. 4 is a diagram for explaining a process of generating a display image from a photographed image. It is assumed that a table on which an object is put is placed in front of the user in a real space. By photographing the table, the stereo camera 110 obtains a left-viewpoint photographed image 16a and a right-viewpoint photographed image 16b. Due to the parallax of the stereo camera 110, a horizontal displacement is generated in the position of a silhouette image of the same subject between the photographed images 16a and 16b.

In addition, due to a lens of the camera, a distortion aberration occurs in the silhouette image of the subject in each of the photographed images 16a and 16b. In general, such a lens distortion is corrected to generate a distortion-free left-viewpoint image 18a and a distortion-free right-viewpoint image 18b (S10). Here, when a pixel at position coordinates (x, y) in each of the original photographed images 16a and 16b is corrected to be at position coordinates (x + Δx, y + Δy) in each of the corrected images 18a and 18b, a displacement vector (Δx, Δy) that represents an amount of the correction is expressed by the following general expressions.
[Math. 1] $\begin{matrix}Δ x = \left({k}_{1}{r}^{2}+{k}_{2}{r}^{4}+{k}_{3}{r}^{6}+⋯\right) \left(x-{c}_{x}\right) \\ Δ y = \left({k}_{1}{r}^{2}+{k}_{2}{r}^{4}+{k}_{3}{r}^{6}+⋯\right) \left(y-{c}_{y}\right)\end{matrix}$ (Expression 1)

In the above expressions, r represents the distance on an image plane from an optical axis of the lens to a target pixel, and (Cx, Cy) represents the position of the optical axis of the lens. Further, k₁, k₂, k₃, and so on each represent a lens distortion coefficient, which depends on the design of the lens. The upper limit of the degree is not limited to a particular number. In a case where a photographed image is displayed on a flat display or is subjected to an image analysis, a typical image having undergone the above correction is used. Meanwhile, in order to make the distortion-free images 18a and 18b visible through an eyepiece lens in the head-mounted display 100, it is necessary to give beforehand an inverse distortion of the distortion that is derived from the eyepiece lens.

For example, in a case where a lens through which an image with four sides being recessed like a pincushion is seen is used, the image is caused to be bulged into a barrel shape in advance. That is, the distortion-free images 18a and 18b are distorted to adapt to the eyepiece lens and are adjusted according to the size of the display panel 122, so that a display image 22 including a left-eye image and a right-eye image is finally generated (S12). The relation between the subject silhouette images in the display image 22 for the left and right eyes and the subject silhouette images in the distortion-free images 18 and 18b not corrected is comparable to the relation between an image having a lens distortion of a camera and a distortion-corrected image.

Therefore, with use of an inverse vector of the displacement vector (Δx, Δy) in expression 1, the distorted subject silhouette images can be generated in the display image 22. It is assumed here that the distortion coefficient is a value defined uniquely to the eyepiece lens. It is to be noted that there is no intention of liming the expression for use in the correction in the present embodiment to expression 1. In addition, in a case where the stereo camera 110 is provided at positions deviated from the user's visual line in the head-mounted display 100, as depicted in FIG. 1, it is necessary to correct a photographed image to be an image suited for the user's visual field. A transformation matrix in common use can be used for the correction.

Besides, a correction for chromatic aberration of the eyepiece lens, a gamma correction according to characteristics of the display panel 122, and the like are required. Moreover, a peripheral edge of a visual field range in the display image 22 may be blurred, and a necessary additional image such as a user interface (UI) may be superimposed. Thus, even in a case where a photographed image is simply displayed in the see-through mode, various processes are actually required. These processes cause a delay of displaying after photographing.

Even if the system has high performance enough to realize a high frame rate or high-resolution display, the system may fail to complete image generation in a display cycle, depending on contents of image processing. In this case, the performance of the system cannot fully be utilized because what is generally called a missing frame is generated, for example. Particularly in a head-mounted display, a display delay relative to a motion of the user's head is likely to be obvious, and hence, the quality of the user experience may rather be deteriorated, or a poor physical condition such as motion sickness may be induced.

To cope with this problem, in the present embodiment, the processing loads are reduced while the quality of the user experience is maintained, so that the intrinsic performance of the head-mounted display 100 can fully be utilized. Specifically, in the head-mounted display 100, either a left-eye image or a right-eye image is alternately generated and displayed for each frame. In addition, an integrated correction amount, which will be explained later, is previously obtained by adding up correction amounts that are necessary for a plurality of kinds of corrections, so that the correction processes are completed at a time as indicated by S14.

Further, in a case where an additional image such as an UI is superimposed on a display image, a distorted additional image is directly rendered on the plane of a distorted display image. This increases the efficiency. If at least any one of the above processes is executed, the image processing loads can be reduced while a smooth motion, which can be achieved by a high frame rate, is visually recognized. It is to be noted that the present embodiment is not limited to the see-through mode, but an application to the see-through mode will be explained below as a representative aspect.

FIG. 5 is a diagram for explaining the manner of alternately displaying a left-eye image and a right-eye image in the present embodiment. In FIG. 5, (a) indicates images photographed by the stereo camera 110, and (b) and (c) each schematically depict a transition of display images on the display panel 122 along a vertical time axis. It is to be noted that, in this example, the frame rate of the stereo camera 110 and the frame rate of the display panel 122 are set to a common value (= 1/Δt), but there is no intention to limit the present embodiment to this setting.

As depicted in (a), a left-viewpoint photographed image (a photographed image 24a, for example) and a right-viewpoint photographed image (a photographed image 24b, for example) are acquired at times t, t + Δt, t + 2Δt, t + 3Δt, and so on. That is, the photographed images correspond to frames of a stereo video that are obtained in cycle of Δt. The frame rate is 120 fps, for example. If these frames are all corrected to be display images and are to be displayed at the same rate of 120 fps, a delay that cannot be overlooked may occur depending on the contents of the processing as explained above, or the display may become unstable.

Therefore, it may be possible to assure more processing time to spare by, for example, thinning out every other photographed image frame and updating the image at a rate of 60 fps. In this case, however, 120-fps display performance which is inherent in the head-mounted display 100 cannot be exhibited. If the user suddenly turns its face, for example, a discomfort feeling is likely to be given because the visual field at a previous time is fixed and left. In addition, smoothness of a video which can inherently be expressed is lost simply because the frame rate is reduced by half.

According to a comparative example useful for understanding the invention, a countermeasure against the above problems is depicted in (b). A time period for displaying an image and a time period for not displaying an image are alternately set. Specifically, in a case where T - t represents a delay time period caused by a correction process performed between photographing and displaying, the photographed images 24a and 24b obtained at the time t are displayed as display images 26a and 26b at a time T. The photographed images are not displayed at the following time t + Δt. Then, photographed images obtained at the following time t + 2Δt are displayed as display images at a time T + 2Δt, and photographed images at the following time t + 3Δt are not displayed.

In this manner, the display is refreshed at the intrinsic frame rate of the display panel 122 while an image non-display time period is allowed. Human beings have a characteristic of interpolating a missing frame in the brains on the basis of a past change in a displayed image. Hence, the non-display time periods are set to make the video look smooth, compared to the above-described case where images obtained as a result of the thinning-out are continuously displayed in cycle of 2Δt which is twice longer. Accordingly, a discomfort feeling is rarely given even if the visual field suddenly moves. In this case, however, it is necessary to simultaneously start correcting the photographed images 24a and 24b at the time t when the photographed images 24a and 24b are obtained. Thus, the load is temporarily increased, so that the delay time period T - t can become long.

In view of this, in the present embodiment, right-viewpoint and left-viewpoint photographed images are alternately thinned out, and the remaining photographed images are used to alternately generate and display a left-eye display image (a display image 28a, for example) and a right-eye display image (a display image 28b, for example) as depicted in (c). In the depicted example, regarding the images 24a and 24b photographed at the time t, the left-eye display image 28a is generated and displayed from the left-viewpoint photographed image 24a while the right-eye display image is not displayed. Regarding the images photographed at the following time t + Δt, the right-eye display image 28b is generated and displayed from the right-viewpoint photographed image while the left-eye display image is not displayed.

Likewise, such display/non-display switching of the left-eye display images and the right-eye display images is repeated. Accordingly, the number of images to be processed is leveled in the time direction, compared to the case of (b). Thus, it is sufficient that a half amount of data is constantly processed. As a result, a delay time period T' - t from photographing until displaying can be reduced substantially by half. In addition, since interpolation in the brain occurs for each non-display time period on the basis of the past change in the display image, a smooth motion, as in (b), can be achieved at the intrinsic frame rate of the display panel 122.

Further, since images photographed at different times are used for the left eye and the right eye, the latest state can be constantly expressed with high time resolution by either one of the images. Accordingly, interpolation in the brain is performed accurately and easily, compared to the case of (b). It is to be noted that the "nondisplayed" state explained so far refers to displaying a black painted-out image in one side or a corresponding region in the display panel, or to halting light emission from the display panel. In the former case, the control can be performed more easily. In the latter case, power consumption of the display panel can be further suppressed.

FIG. 6 depicts an internal circuit configuration of the content processing device 200. The content processing device 200 includes a central processing unit (CPU) 222, a graphics processing unit (GPU) 224, and a main memory 226. These sections are mutually connected via a bus 230. Further, an input/output interface 228 is connected to the bus 230. A communication section 232, a storage section 234, an output section 236, an input section 238, and a recording medium driving section 240 are connected to the input/output interface 228.

The communication section 232 includes an interface for a USB or an IEEE1394 peripheral device, and an interface for networks such as wired LAN or wireless LAN. The storage section 234 includes a hard disk drive, a nonvolatile memory, or the like. The output section 236 outputs data to the head-mounted display 100. The input section 238, for example, receives a data input from the head-mounted display 100 and receives user operation contents from a controller (not depicted). The recording medium driving section 240 drives a removable recording medium which is a magnetic disk, an optical disk, a semiconductor memory, or the like.

The CPU 222 generally controls the content processing device 200 by executing an operating system stored in the storage section 234. Further, the CPU 222 executes various programs (a game application and the like, for example) that are read out from the storage section 234 or a removable storage medium and are loaded into the main memory 226, or that are downloaded via the communication section 232. The GPU 224 has a geometry engine function and a rendering processor function. The GPU 224 performs rendering in accordance with a rendering command supplied from the CPU 222 and outputs a result of the rendering to the output section 236. The main memory 226 includes a random access memory (RAM) and is configured to store programs and data that are required for processing.

FIG. 7 illustrates an internal circuit configuration of the head-mounted display 100. The head-mounted display 100 includes a CPU 136, a main memory 138, a display section 124, and a sound output section 126. These sections are mutually connected via a bus 128. Further, an input/output interface 130 is connected to the bus 128. A communication section 132 equipped with a wireless communication interface, a motion sensor 134, and the stereo camera 110 are connected to the input/output interface 130.

The CPU 136 processes information acquired from the respective sections of the head-mounted display 100 via the bus 128 and supplies the display section 124 and the sound output section 126 with display images and sound data acquired from the content processing device 200. The main memory 138 stores programs and data that are required for processing at the CPU 136.

The display section 124 includes the display panel 122 illustrated in FIG. 3 and is configured to display an image in front of the eyes of the user wearing the head-mounted display 100. The display section 124 further includes an eyepiece lens that is positioned between the display panel 122 and the user's eyes when the user is wearing the head-mounted display 100. The sound output section 126 includes a loudspeaker or an earphone that is provided at a position corresponding to an ear of the user who is wearing the head-mounted display 100. The sound output section 126 makes the user hear sound.

The communication section 132 is an interface for exchanging data with the content processing device 200 and performs communication by a known wireless communication technology such as Bluetooth (registered trademark). The motion sensor 134 includes a gyro sensor, an acceleration sensor, an angular acceleration sensor, and the like. The motion sensor 134 acquires the tilt, acceleration, angular acceleration, and the like of the head-mounted display 100. The stereo camera 110 is a pair of video cameras that photograph a surrounding real space from left and right viewpoints, as depicted in FIG. 1.

FIG. 8 illustrates a configuration of functional blocks of a display control device in the present embodiment. It is to be noted that, in a case where image photographing and displaying in the see-through mode are completed in the head-mounted display 100 along the data path indicated by the arrow A in FIG. 3, a display control device 150 is included in the head-mounted display 100. In a case where at least a part of the display image generating process is performed in the content processing device 200 along the data path indicated by the arrow B, the display control device 150 is provided in a distributed manner in the content processing device 200 and the head-mounted display 100.

From the perspective of hardware, the depicted functional blocks are implemented by the circuit configurations depicted in FIG. 6 and 7. From the perspective of software, the functional blocks are implemented by programs that are loaded from a recording medium or the like into the main memory or the like and that exhibit functions such as a data input function, a data hold function, an image processing function, and a communication function. Therefore, a person skilled in the art will understand that these functional blocks can be implemented in many different ways by hardware, by software, or by a combination thereof, and that the functional blocks are not limited to be implemented in a particular way.

The display control device 150 includes a photographed-image acquisition section 152 that acquires a photographed image from the stereo camera 110, a buffer memory 154 that saves data regarding the photographed image, a content image acquisition section 156 that acquires a content image, an image data generation section 160 that generates a display image, an additional image data storage section 158 that stores data regarding an additional image to be superimposed on the display image, a correction regulation storage section 170 that stores a regulation for correcting the display image, and an output control section 172 that controls output of an image to the display panel 122.

The photographed-image acquisition section 152 sequentially acquires data regarding frames of a left-viewpoint video and frames of a right-viewpoint video which are photographed at a predetermined rate by the stereo camera 110. Since a left-viewpoint image and a right-viewpoint image are alternately used for display in the see-through mode as previously explained, the photographed-image acquisition section 152 may select and acquire necessary data when acquiring the photographed images.

Particularly in a case where the photographed-image acquisition section 152 is included in the content processing device 200, necessary data is selected to save a communication band that is required for data exchange with the head-mounted display 100. It is to be noted that, in a modification, the stereo camera 110 itself may alternately photograph a left-viewpoint image and a right-viewpoint image for each frame. In this case, the photographed-image acquisition section 152 does not need to select an image necessary for display. In addition, a communication band that is required for data transmission can be saved.

The photographed-image acquisition section 152 sequentially and temporarily stores data regarding the acquired photographed images in the buffer memory 154. The content image acquisition section 156 acquires data regarding a content image to be displayed, during a time period when the head-mounted display 100 is not in the see-through mode. The content image acquisition section 156 renders a computer graphics image representing a virtual world of an electronic game that is being executed as a content application, for example. Alternatively, the content image acquisition section 156 may acquire data regarding a computer graphics image or content data regarding a movie or the like from an external device.

The content image acquisition section 156 sequentially and temporarily stores data regarding the acquired content images into the buffer memory 154. The image data generation section 160 sequentially generates frames of display images by using data regarding the photographed images or the content images stored in the buffer memory 154. More specifically, the image data generation section 160 includes a display target control section 162, a correction section 164, an additional image rendering section 166, and a mode transition control section 168. The display target control section 162 determines whether to set a state according to the claimed invention (hereinafter referred to as a "one-side display state") in which a left-eye image and a right-eye image are alternately displayed or a state (hereinafter referred to as a "simultaneous display state") in which a left-eye image and a right-eye image are simultaneously displayed. When determining to set the one-side display state, the display target control section 162 controls switching of images to be displayed. For example, the display target control section 162 normally sets the simultaneous display state for content images, and sets the one-side display state for the see-through mode. Therefore, for example, the display target control section 162 acquires, from the content image acquisition section 156, information indicating whether or not a content image is being supplied, and realizes the see-through mode in the one-side display state when no content image is being supplied.

The correction section 164 acquires data regarding an image to be displayed, from the buffer memory 154, and makes a correction that is necessary for display on the image. In the see-through mode, the correction section 164 eliminates a distortion induced by the lens of the stereo camera 110 from a photographed image, as depicted in FIG. 4, and further, makes a correction for giving, to the photographed image, a distortion for the eyepiece lens of the head-mounted display 100. Corrections to be made by the correction section 164 are not limited to the above corrections and may include any of the common corrections described above.

However, these corrections are made at a time in the present embodiment. Accordingly, the speed of the correction processing is increased, and a storage region that is necessary to develop the corrected images is minimized. Therefore, correction amounts (a displacement amount and a displacement direction of each pixel), such as the displacement vector (Δx, Δy) described above, that are necessary for the corrections are calculated, and are added up to derive the final correction amount as an integrated correction amount. Since the integrated correction amount is information for each pixel, the integrated correction amounts are stored in a map associated with position information of pixels, in the correction regulation storage section 170.

However, colors on a photographed image are sampled for respective pixels in a display image in practice as explained later. Therefore, information for identifying a position on a photographed image from a corresponding pixel in a display image may be prepared as an integrated correction amount. In a case where the photographed-image acquisition section 152 has acquired both a left-viewpoint photographed image and a right-viewpoint photographed image, the correction section 164 selects data regarding one of the photographed images stored in the buffer memory 154 in order to use the selected image for display, and then makes a correction on the selected image. The corrected images are sequentially stored in a frame memory 174 of the output control section 172.

It is to be noted that, in the one-side display state, the correction section 164 stores a black painted-out image in the non-display side image region, or stores information indicating a temporary stop of light emission in this region of the display panel 122. The additional image rendering section 166 renders an additional image to be superimposed on a display image. The additional image is an image indicating additional information such as an UI, an alarm, menus, or an operation method. The additional image is to be superimposed on a content image or a photographed image. The additional image rendering section 166 renders the additional image, if needed, when the user explicitly makes a call, during the see-through mode, or when an alarm is necessary.

During the superimposition of the additional image, the correction section 164 excludes a region, in the original display image, that is to be hidden by the additional image from a rendering target in the first place. Accordingly, an unnecessary process is eliminated from the correction processes, and the display is realized more speedily. Further, the additional image rendering section 166 renders a distortion-including additional image directly on the plane of a display image including a distortion for the eyepiece lens, in such a way that the rendered additional image is suited for the distortion. Accordingly, compatibility with an aspect in which a plurality of corrections are performed at a time on a display image is enhanced. Low-delay display can be realized also during superimposition of an additional image. In addition, a storage region for developing an additional image including no distortion is unnecessary.

The mode transition control section 168 controls an image transition in switching between the content image displaying mode and the see-through mode. Specifically, the mode transition control section 168 adjusts brightness of a content image and brightness of a photographed image in such a manner as to perform cross-fading between the content image and the photographed image. Cross-fading is a technique of performing switching between two images by gradually reducing the brightness of a pre-switching image to cause this image to disappear while gradually increasing the brightness of a post-switching image to cause this image to appear.

However, in a case where content images are displayed in the simultaneous display state while the see-through mode is set in the one-side display state, the mode transition control section 168 provides a time difference between brightness changes in left and right images to be displayed in the simultaneous display state. Specifically, the mode transition control section 168 first alternately changes for each frame the brightness of either one of a left-eye display image and a right-eye display image which are displayed in the simultaneous display state, before changing the brightness of the other display image, and replaces the resultant image with an image that is displayed in the one-side display state. Thereafter, according to a brightness change in the image that is displayed in the one-side display state, a brightness change is made on the other image that is displayed in the simultaneous display state, whereby cross-fading is presented.

Accordingly, the cross-fading is visually recognized while a time period during which the left and right images and the image that is to be displayed in the one-side display state all need to be simultaneously processed is eliminated, and an increase of the processing loads during the transition process is suppressed. The detailed explanation thereof will be given later. The output control section 172 reads, from the frame memory 174, data regarding the left-eye and right-eye display images rendered by the correction section 164 and the additional image rendering section 166, and outputs the read display images respectively to the left and right regions of the display panel 122.

FIG. 9 is a diagram for explaining a method of cross-fading performed by the mode transition control section 168. In FIG. 9, (a) depicts an example of an image brightness change before and after switching by general cross-fading. In (a), the time is indicated in the horizontal direction while the brightness is indicated in the vertical direction. A solid line 30 represents a brightness change of a pre-switching image. A broken line 32 represents a brightness change of a post-switching image. In general, the brightness of the post-switching image is increased concurrently with a gradual decrease in the brightness of the pre-switching image as depicted in (a), so that disappearance of the pre-switching image and emergence of the post-switching image are expressed by a smooth change.

In this case, during a transition time period A, the pre-switching and post-switching images need to be simultaneously processed because these images are displayed in the manner overlapping each other. In a case where this is applied to the present embodiment and where switching from the simultaneous display state to the one-side display state, for example, is performed, the brightness change indicated by the solid line 30 is given to both the left-eye image and the right-eye image. As a result, three kinds of images further including the image to be displayed on one side in the one-side display state need to be simultaneously processed during the transition time period A, so that the processing loads are temporarily increased.

In FIG. 9, (b) indicates an example of brightness changes by cross-fading in the present embodiment. Also in this example, switching from the simultaneous display state to the one-side display state is assumed. A solid line 34a represents a brightness change in one of simultaneously displayed images. A dashed line 34b represents a brightness change in the other image. A broken line 36 represents a brightness change in an image to be displayed on one side in the one-side display state. However, in reality, the brightness changes as depicted are alternately given to a left-eye image and a right-eye image for each frame. In the one-side display state after switching, one of the images to which the change indicated by the broken line 36 is not given is not displayed as previously explained.

The mode transition control section 168 first gradually decreases the brightness of one of two left and right images simultaneously displayed, at a cross-fading start time B (solid line 34a). Then, at a time C when this image disappears, an image to be displayed in the one-side display state is caused to appear and the brightness thereof is gradually increased (broken line 36). The brightness of the other one of the simultaneously displayed images is also gradually decreased from the time C (dashed line 34b). At a time D when this image disappears and the brightness of the image to be displayed in the one-side display state reaches the original brightness, the cross-fading is completed.

That is, the mode transition control section 168 causes a time period of gradually reducing the brightness of the left one of the simultaneously displayed images to deviate from a time period of gradually reducing the brightness of the other right image, and causes the image to be displayed in the one-side display state to appear in the region that has been first placed into a nondisplayed state. Accordingly, at any timing in the transition period, it is sufficient to process only two kinds of images. An increase of the processing loads can thus be suppressed. In addition, the brightness of the other one of the simultaneously displayed images is maintained until the time C as indicated by the dashed line 34b. Hence, the user visually recognizes cross-fading between the pre-switching and post-switching images during the period from the time C to the time D.

In the present embodiment, a state where only one of left and right images is displayed is allowed. The cross-fading depicted also utilizes a visual effect that normal display seems to be performed because the brightness of one of simultaneously displayed images is maintained even after the other image disappears. Accordingly, smooth switching can be performed without involving simultaneous processing of three kinds of images. A similar effect is provided also when switching from the one-side display state to the simultaneous display state is performed, if the switching is performed along the inverted time axis.

It is to be noted that the depicted brightness changes are preferably achieved by actual light emission of the display panel. If the value of a pixel value is linearly changed, the actual light emission is changed non-linearly due to a characteristic of the display panel, whereby a smooth transition is not visually recognized in some cases. Therefore, a regulation for converting pixel values on data is determined in advance in such a manner as to linearly change the display brightness with time, and then is stored in the correction regulation storage section 170. In accordance with this conversion regulation in the correction regulation storage section 170, the display brightness is suitably controlled by, for example, non-linearly changing pixel values in a display image with time.

FIG. 10 schematically depicts a transition of display images that occurs when the brightness changes depicted in (b) of FIG. 9 are given. In each of display images 40a to 40e, an upper part represents an odd-numbered frame while a lower part represents an even-numbered frame. First, in the simultaneous display state, a left-eye image and a right-eye image are displayed with the original brightness, irrespective of the order of frames, as depicted in the display image 40a. In the example in FIG. 10, a virtual world including a character is expressed.

When the mode transition control section 168 starts cross-fading at the time B, the brightness of the left-eye image and the brightness of the right-eye image are alternately selected as a brightness decreasing target, as depicted in the display image 40b. An image as the brightness decreasing target is to be replaced afterwards with an image to be displayed in the one-side display state, and thus, the order of selecting the brightness decreasing target is synchronized with the order of selecting an image to be displayed in the one-side display state. Then, at the time C when the brightness decreasing target image completely disappears, as depicted in the display image 40c, the mode transition control section 168 starts gradually decreasing the brightness of the remaining image.

At the same time, the mode transition control section 168 starts displaying an image to be displayed in the one-side display state, with low brightness, and gradually increases the brightness. Accordingly, there occurs a situation where the image for the simultaneous display state and the image for the one-side display state are both displayed on the left and right sides with the brightness in a medium range, as depicted in the display image 40d. Thereafter, at and after the time D when the image for the simultaneous display state disappears while the image for the one-side display state reaches its original brightness, the one-side display state is completely established, as depicted in the display image 40e.

Next, a specific explanation will be given of an effect that is provided when the correction section 164 performs a plurality of corrections simultaneously, as briefly explained with reference to FIG. 4. FIG. 11 depicts a general processing procedure of generating a display image from a photographed image. It is to be noted that, in each of FIGS. 11 and 12, a change in only one of left and right images is depicted, and a checkered pattern is a display target. In the example in FIG. 11, a photographed image 46 has a distortion derived from the lens of the stereo camera 110. A correction for eliminating the distortion from the photographed image 46 is first made, and a resultant intermediate image 48 is developed into a buffer memory 50 (S20).

Further, in view of a distortion to be derived from the eyepiece lens of the head-mounted display 100, a correction for giving an inverse distortion to the intermediate image 48 is made, thereby generating a display image 52. Then, the display image 52 is outputted to the display panel 122 (S22). In this procedure, the degree of distortion in the photographed image 46 becomes larger toward an end of the image. To maintain the resolution in an area near the center of the photographed image 46, a peripheral edge portion is extended. As a result, data regarding a non-rectangular shape having a larger size than the photographed image 46 is obtained as the intermediate image 48. When the viewing angle of the stereo camera 110 is wider, the size of the intermediate image 48 becomes larger.

The buffer memory 50 needs to be prepared so as to handle a rectangular shape including the intermediate image 48.

Hence, large unnecessary regions including no image data are generated as indicated by black areas in FIG. 11. In addition, sampling is required two times in this procedure. That is, in S20, with use of the pixel displacement vector (Δx, Δy) for eliminating a distortion of the camera lens, colors at respective positions, on the photographed image 46, deviated from the pixels on the intermediate image 48 by (-Δx, -Δy), for example, are sampled.

In addition, in S22, with use of the pixel displacement vector (Δx', Δy') for eliminating a distortion of the eyepiece lens, colors at respective positions, on the intermediate image 48, deviated from the pixels on the display image 52 by (Δx', Δy') are sampled. In the sampling, colors need to be determined by interpolation of the pixel values of peripheral pixels around a pixel to be sampled, in many cases. Hence, there is a need to conduct computations for reading the pixel values of the peripheral pixels and performing interpolation, as many times as the number of pixels to be included in a corrected image in each step. Therefore, the processing loads are increased.

Moreover, due to the two-step interpolation, there are two timings at which a modulation transfer function (MTF) may be deteriorated. Therefore, a resolution characteristic of the display image 52 to be eventually obtained, is likely to be impaired. In addition, with this method, when the viewing angle of a display image is widened, loads in reading/writing data from/to the buffer memory 50 and in performing computations are significantly increased.

FIG. 12 depicts a processing procedure in which the correction section 164 generates a display image from a photographed image in the present embodiment. As explained above, the correction section 164 generates the display image 52 from the photographed image 46 not via an intermediate image (S30). It is assumed that the displacement vectors depicted in FIG. 11 are used. The correction section 164 samples the colors at positions, on the photographed image 46, deviated by (Δx' - Δx, Δy' - Δy) from respective pixels on the display image 52, and determines the pixel values on the display image 52.

It is to be noted that, in actuality, a pixel displacement for eliminating a distortion of the camera lens, a pixel displacement for adding a distortion for the eyepiece lens, and any other displacements for various corrections such as correcting the viewing angle as described above are added to the correction amount (Δx' - Δx, Δy' - Δy) in advance, thereby deriving the integrated correction amount. The integrated correction amounts are stored in advance as a map in association with the respective pixels on the image plane of the display image 52, in the correction regulation storage section 170. It is to be noted that, in view of the chromatic aberration of the eyepiece lens, the integrated correction amount is derived for each of the three primary colors, i.e., red, green, and blue. Accordingly, subject silhouette images on the red, green, and blue planes are deviated from each other on the display image 52. Thus, when viewed through the eyepiece lens, the image is visually recognized without deviation.

According to the procedure described above, the storage region can be saved because the buffer memory 50 is not required, and the loads in reading/writing data and conducting computations for interpolation can be reduced, compared to the method indicated in FIG. 11. Accordingly, even when the view angle of the display image 52 is wide, an increase of required resources can be suppressed, so that low-delay display can be realized. In addition, the scale of the image processing integrated circuit 120 or the like included in the head-mounted display 100 can be made compact, and the power consumption and heat generation can be suppressed. Therefore, the wearing feel of the head-mounted display 100 can be improved. Moreover, as a result of reduction in the number of times of performing sampling, a resolution characteristic of a display image can easily be maintained.

FIG. 13 schematically depicts states in which the additional image rendering section 166 superimposes an additional image on a display image. In this example, while the see-through mode is realized by one-side display, an additional image indicating an operation method for performing display switching to a content image to be expressed in VR is superimposed. It is to be noted that FIG. 13 depicts only one of left-eye and right-eye images. The other image is not displayed in the one-side display state.

In each of (a) and (b), an additional image 54a or 54b including a long black rectangular with blurred edges and a white character string set in the rectangular, is superimposed on a display image 56 which is generated from a photographed image. As a result of superimposition of the additional image 54a or 54b in this manner, the correction section 164 can skip rendering of a region, in the display image 56, that is hidden by the additional image 54a or 54b. Accordingly, unnecessary processing in data reading from the buffer memory 154 where photographed images are stored or in performing sampling can be omitted.

Meanwhile, the additional images 54a and 54b in (a) and (b) are different in the superimposition positions from each other. In the present embodiment, a display image is generated from a photographed image not via an intermediate image including no distortion, as depicted in FIG. 12. For this reason, the additional image rendering section 166 renders the additional image 54a or 54b having a distortion directly on the display image 56 which has a distortion for the eyepiece lens. As is clear from FIG. 13, the degrees of the distortion in the additional images 54a and 54b vary depending on the superimposition position. Accordingly, there is a difference in loads of the rendering that is performed by the additional image rendering section 166.

Specifically, with an increase of the distance from the center (the position of the optical axis of the eyepiece lens) of the display image 56, the distortion degree in the additional image 54a due to distortion aberration or chromatic aberration becomes higher, as depicted in (a). Accordingly, a load of the rendering is increased. Therefore, the additional image rendering section 166 superimposes the additional image onto a limited region within a predetermined range from the center of the display image 56. For example, in a case where the center of the display image 56 matches the center of the additional image 54b as depicted in (b), it is sufficient to render a substantially rectangular image with low load, irrespective of the primary colors. Since the superimposition region is restricted in the manner described above, excess loads for rendering the additional image can be prevented.

FIG. 14 is a diagram for explaining a method in which the additional image rendering section 166 efficiently renders an additional image. In FIG. 14, (a) depicts an example of a general procedure of displaying an additional image in a superimposed manner. In this case, first, a distortion-free additional image 60 is rendered in a buffer memory, and is then superimposed on a distortion-free display image 62. The display image 62, which corresponds to the intermediate image 48 in FIG. 11, is separately stored in the buffer memory. Then, the entirety of the distortion-free display image 62 on which the additional image has been superimposed is distorted for the eyepiece lens, so that a display image 64 is generated.

In this processing procedure, the shape of the rectangular additional image 60 is not changed and only the size thereof is adjusted, and then, the additional image can be superimposed on the distortion-free display image 62. Therefore, it is sufficient to express the additional image 60 by two polygons each having vertexes at four corners of the image plane. However, a buffer memory for storing the distortion-free additional image 60 and a process of performing sampling from the buffer memory are additionally required.

(b) depicts a manner in which the additional image rendering section 166 of the present embodiment renders an additional image having a distortion directly on a display image. In this case, the image plane of the additional image is divided in advance into multiple polygons each having at least one vertex positioned in an inner region of the plane. On the left side in the figure, model data 66 for the additional image, indicating a distribution of the vertexes of the polygons thus divided, is depicted. The model data 66 is stored in advance in the additional image data storage section 158.

In addition, the additional image data storage section 158 further stores information indicating the relation between the vertexes in the model data 66 and the corresponding position coordinates used when the superimposition is performed on the distortion-including display image 68, as indicated by arrows 70, for example. Accordingly, the distortion of the additional image can be controlled according to the granularity corresponding to the vertex interval. That is, the additional image rendering section 166 renders the additional image on the plane of the distortion-including display image 68 by polygon, so that a distortion corresponding to the position coordinates of each vertex can directly be given.

When the number of the vertexes is increased to narrow the interval between the vertexes, the distortion can be expressed with higher precision. In addition, in a case where peripheral edges of an additional image are blurred as depicted in FIG. 14, the gradation direction of the blurring is not uniformly determined due to the distortion of the additional image itself. When the model data 66 including the multiple vertexes as depicted in FIG. 14 is prepared, blur setting can be performed by vertex. Natural processing corresponding to the distortion can be easily realized. It is to be noted that the present embodiment is not intended to limit the image processing that is set for the vertexes of polygons to blurring.

According to the present embodiment explained so far, either a left-eye image or a right-eye image is alternately displayed on the head-mounted display for each frame of a video to be displayed. The non-displayed image is interpolated in the user's brain on the basis of the last image, the past image motion, and the like on the displayed side. Accordingly, a state close to simultaneous display of both of the images can visually be recognized. As a result, images can be recognized with smoothness that is comparable to that of the intrinsic performance of the head-mounted display, while the amount of data to be processed is significantly reduced.

Accordingly, particularly in the see-through mode in which a photographed image of the front side of the user is displayed in real time, an image of the real space can be presented with a reduced delay with respect to a motion of the user's head. Therefore, a discomfort feeling is rarely provided, and the possibility of inducing motion sickness can be reduced. In addition, in the see-through mode, a photographed image is corrected to a display image not via an intermediate image on the basis of an integrated correction amount obtained by adding up a plurality of kinds of correction amounts to be given to the photographed image. Accordingly, a required buffer memory can be minimized, and loads in reading/writing data to/from a memory and in conducting computations for sampling can be reduced.

Moreover, in a case where switching between a mode of simultaneously displaying left and right images and a mode of alternately displaying the images is performed, the switching is smoothly presented by cross-fading. In this case, the time period for making a brightness change in the left image is deviated from that in the right image to be displayed in the simultaneous display. Therefore, the cross-fading can visually be recognized while the number of kinds of images to be simultaneously processed is not increased.

Further, an additional image indicating additional information such as a UI is superimposed on a display image. In this case, a region, on the display image, that is to be hidden by the additional image is excluded from a rendering target, so that unnecessary processing can be omitted. In addition, the plane of the additional image is divided into fine polygons, and multiple vertexes are determined, whereby the additional image to which a distortion has been given is directly rendered on the plane of a display image having a distortion. Also in this case, a required buffer memory can be minimized, and the loads in reading/writing data to/from the memory and in conducting computations for sampling can be reduced.

According to the invention as claimed, changes in the appearance can be suppressed and processing loads or a data transmission amount can significantly be reduced, compared to a case where all left and right images are simultaneously displayed. As a result, the possibility that image generation is not completed in a frame display cycle can be reduced, so that high-quality images are stably displayed. In addition, the power consumption can be reduced. Therefore, the duration time period of a chargeable battery can be lengthened, and heat generation can be suppressed. Moreover, the head-mounted display can be operated even if a built-in integrated circuit has a relatively small scale. Therefore, a light weight can be achieved, and the wearing feel of the head-mounted display can be improved.

The present invention has been explained on the basis of the embodiment.

### [Industrial Applicability]

As explained so far, the present invention can be used for a display control device, a head-mounted display, a game machine, an image displaying system including at least any one thereof, and the like.

### [Reference Signs List]

10: Image display system
100: Head-mounted display
110: Stereo camera
120: Image processing integrated circuit
122: Display panel
150: Display control device
152: Photographed-image acquisition section
154: Buffer memory
156: Content image acquisition section
158: Additional image data storage section
160: Image data generation section
162: Display target control section
164: Correction section
166: Additional image rendering section
168: Mode transition control section
170: Correction regulation storage section
172: Output control section
174: Frame memory
200: Content processing device

## Claims

1. A display control device (150) that causes a left-eye display image and a right-eye display image of a frame of a video to be displayed in left and right regions of a display panel (122), respectively, the display control device comprising:
an image data generation section (160) that is configured to alternately generate either the left-eye display image or the right-eye display image for the frame; and
an output control section that is configured to:
control the display panel to display either the left-eye display image or the right-eye display image in a corresponding one of the left region or the right region; and while no image is displayed in the other region; and
control the display panel to suppress the other one of the left region or the right region from displaying an image.

2. The display control device according to claim 1, further comprising:
a photographed-image acquisition section that acquires data regarding a stereo video photographed by a stereo camera (110) from left and right viewpoints, wherein, by alternately using a left-viewpoint photographed image and a right-viewpoint photographed image constituting a frame of the stereo video, the image data generation section alternately generates the left-eye display image and the right-eye display image.

3. The display control device according to claim 2, wherein the photographed-image acquisition section alternately acquires the left-viewpoint photographed image and the right-viewpoint photographed image constituting a frame of the stereo video, and
the image data generation section generates the display images by using the acquired photographed images.

4. The display control device according to claim 2 or 3, further comprising:
a correction regulation storage section (170) that stores, for each pixel, an integrated correction amount of a plurality of kinds of corrections necessary to generate the display images from the photographed images, wherein
the image data generation section generates the display images not via intermediate images by correcting the photographed images by the integrated correction amount.

5. The display control device according to any one of claims 2 to 4, wherein,
when switching is performed between a simultaneous display state in which the left-eye display image and the right-eye display image are simultaneously displayed and a one-side display state in which the either one of the left-eye display image and the right-eye display image is displayed,
the image data generation section sets a cross-fading process of gradually decreasing brightness of a pre-switching display image and concurrently increasing brightness of a post-switching display image, and change brightness alternately in either the left-eye display image or the right-eye display image displayed in the simultaneous display state, for each frame, before changing brightness in the other image, to replace the image having undergone the brightness change with an image to be displayed in the one-side display state.

6. The display control device according to claim 5, wherein, in display switching from a content image to each photographed image, the image data generation section switches the simultaneous display state to the one-side display state.

7. The display control device according to claim 5 or 6, wherein,
in switching between the simultaneous display state and the one-side display state, the image data generation section changes a pixel value on data of the display images with time in accordance with a regulation of linearly changing display brightness with time.

8. The display control device according to any one of claims 1 to 7, wherein
the image data generation section renders an additional image indicating additional information directly in a region within a predetermined range from a center of each display image to which an inverse distortion has been given in view of a distortion of an eyepiece lens during a viewing time, after giving a distortion according to a position to the additional image.

9. The display control device according to claim 8, further comprising:
an additional image data storage section (158) that stores, as model data for the additional image, data regarding a plane including a plurality of polygons each having at least one vertex disposed in an inner region of the plane, wherein
the image data generation section renders the additional image having a distortion for each of the polygons on a basis of position coordinates of the vertex defined on a plane of each display image.

10. The display control device according to claim 8 or 9,
wherein
the image data generation section excludes, from a target to be rendered, a region in each display image that is to be hidden by the additional image.

11. A head-mounted display (100) comprising:
the display control device (150) according to any one of claims 1 to 10;
a stereo camera (110) that photographs a stereo video to be displayed as the display images; and
the display panel (122).

12. The head-mounted display according to claim 11, wherein the stereo camera alternately photographs for each frame an image from the left viewpoint and an image from the right viewpoint constituting a frame of the stereo video, and supplies the images to the display control device.

13. A display control method performed by a display control device (150) that causes a left-eye display image and a right-eye display image constituting a frame of a video to be displayed in left and right regions of a display panel (122), respectively, the method comprising:
a step of alternately generating either one of the left-eye display image and the right-eye display image for each frame;
a step of controlling the display panel to display either the left-eye display image in the left region or the right-eye display image in the right region; and
a step of controlling the display panel to suppress the other one of the left region or the right region from displaying an image.

14. A computer program for causing a computer that causes a left-eye display image and a right-eye display image constituting a frame of a video to be displayed in left and right regions of a display panel (122), respectively, to implement the method of claim 13.

## Patentansprüche

1. Anzeigesteuervorrichtung (150), die veranlasst, dass ein Anzeigebild für das linke Auge und ein Anzeigebild für das rechte Auge eines Einzelbilds eines Videos jeweils in einer linken und einer rechten Region eines Anzeigefelds (122) angezeigt werden, die Anzeigesteuervorrichtung umfassend:
einen Bilddatenerzeugungsabschnitt (160), der konfiguriert ist, um abwechselnd entweder das Anzeigebild für das linke Auge oder das Anzeigebild für das rechte Auge für das Einzelbild zu erzeugen; und einen Ausgabesteuerabschnitt, der konfiguriert ist zum:
Steuern des Anzeigefelds, um entweder das Anzeigebild für das linke Auge oder das Anzeigebild für das rechte Auge in einem entsprechenden von der linken Region oder der rechten Region anzuzeigen; und während in der anderen Region kein Bild angezeigt wird; und
Steuern des Anzeigefelds, um das Anzeigen eines Bilds in der anderen der linken Region oder der rechten Region zu unterdrücken.

2. Anzeigesteuervorrichtung nach Anspruch 1, ferner umfassend:
einen Erfassungsabschnitt für fotografierte Bilder, der Daten bezüglich eines Stereovideos erfasst, das durch eine Stereokamera (110) aus einem linken und einem rechten Blickpunkt fotografiert wurde, wobei durch abwechselndes Verwenden eines fotografierten Bilds eines linken Blickpunkts und eines fotografierten Bilds eines rechten Blickpunkts, die ein Einzelbild des Stereovideos bilden, der Bilddatenerzeugungsabschnitt abwechselnd das Anzeigebild für das linke Auge und das Anzeigebild für das rechte Auge erzeugt.

3. Anzeigesteuervorrichtung nach Anspruch 2, wobei der Erfassungsabschnitt für fotografierte Bilder abwechselnd das fotografierte Bild des linken Blickpunkts und das fotografierte Bild des rechten Blickpunkts erfasst, die ein Einzelbild des Stereovideos bilden, und
der Bilddatenerzeugungsabschnitt die Anzeigebilder durch Verwenden der erfassten fotografierten Bilder erzeugt.

4. Anzeigesteuervorrichtung nach Anspruch 2 oder 3, ferner umfassend:
einen Korrekturregelungsspeicherabschnitt (170), der, für jedes Pixel, einen integrierten Korrekturbetrag einer Vielzahl von Arten von Korrekturen speichert, die erforderlich sind, um die Anzeigebilder aus den fotografierten Bildern zu erzeugen,
wobei der Bilddatenerzeugungsabschnitt die Anzeigebilder nicht über Zwischenbilder durch Korrigieren der fotografierten Bilder um den integrierten Korrekturbetrag erzeugt.

5. Anzeigesteuervorrichtung nach einem der Ansprüche 2 bis 4, wobei,
wenn ein Umschalten zwischen einem Zustand der gleichzeitigen Anzeige, in dem das Anzeigebild für das linke Auge und das Anzeigebild für das rechte Auge gleichzeitig angezeigt werden, und einem Zustand einer einseitigen Anzeige, in dem entweder das Anzeigebild für das linke Auge oder das Anzeigebild für das rechte Auge angezeigt wird, durchgeführt wird,
der Bilddatenerzeugungsabschnitt einen Überblendungsprozess eines allmählichen Verringerns einer Helligkeit eines Vor-Umschalt-Anzeigebilds und eines gleichzeitigen Erhöhens der Helligkeit eines Nach-Umschalt-Anzeigebilds einstellt und die Helligkeit abwechselnd entweder in dem Anzeigebild für das linke Auge oder dem Anzeigebild für das rechte Auge ändert, die in dem gleichzeitigen Anzeigezustand angezeigt werden, für jedes Einzelbild, bevor die Helligkeit in dem anderen Bild geändert wird, um das Bild, das der Helligkeitsänderung unterzogen wurde, durch ein Bild zu ersetzen, das in dem einseitigen Anzeigezustand anzuzeigen ist.

6. Anzeigesteuervorrichtung nach Anspruch 5, wobei, bei dem Anzeigeumschalten von einem Inhaltsbild zu jedem fotografierten Bild der Bilddatenerzeugungsabschnitt den gleichzeitigen Anzeigezustand in den einseitigen Anzeigezustand umschaltet.

7. Anzeigesteuervorrichtung nach Anspruch 5 oder 6, wobei,
bei dem Umschalten zwischen dem gleichzeitigen Anzeigezustand und dem einseitigen Anzeigezustand der Bilddatenerzeugungsabschnitt einen Pixelwert von Daten der Anzeigebilder mit der Zeit gemäß einer Regelung einer sich mit der Zeit linear ändernden Anzeigehelligkeit ändert.

8. Anzeigesteuervorrichtung nach einem der Ansprüche 1 bis 7, wobei der Bilddatenerzeugungsabschnitt ein zusätzliches Bild, das zusätzliche Informationen angibt, direkt in einer Region innerhalb eines vorbestimmten Bereichs von einer Mitte jedes Anzeigebilds rendert, dem im Hinblick auf eine Verzerrung einer Okularlinse während einer Betrachtungszeit eine inverse Verzerrung verliehen wurde, nachdem eine Verzerrung gemäß einer Position zu dem zusätzlichen Bild verliehen wurde.

9. Anzeigesteuervorrichtung nach Anspruch 8, ferner umfassend:
einen zusätzlichen Bilddatenspeicherabschnitt (158), der, als Modelldaten für das zusätzliche Bild, Daten bezüglich eines Felds speichert, das eine Vielzahl von Polygonen einschließt, die jeweils mindestens einen Scheitelpunkt aufweisen, der in einer inneren Region des Felds angeordnet ist, wobei
der Bilddatenerzeugungsabschnitt das zusätzliche Bild, das eine Verzerrung aufweist, für jedes der Polygone auf einer Basis von Positionskoordinaten des Scheitelpunkts rendert, der auf einem Feld jedes Anzeigebilds definiert ist.

10. Anzeigesteuervorrichtung nach Anspruch 8 oder 9, wobei der Bilddatenerzeugungsabschnitt, aus einem zu rendernden Ziel, eine Region in jedem Anzeigebild ausschließt, die durch das zusätzliche Bild zu verdecken ist.

11. Am Kopf montierte Anzeige (100), umfassend:
die Anzeigesteuervorrichtung (150) nach einem der Ansprüche 1 bis 10;
eine Stereokamera (110), die ein Stereovideo aufnimmt, das als die Anzeigebilder anzuzeigen ist; und das Anzeigefeld (122).

12. Am Kopf montierte Anzeige nach Anspruch 11, wobei die Stereokamera für jedes Einzelbild abwechselnd ein Bild aus dem linken Blickpunkt und ein Bild aus dem rechten Blickpunkt fotografiert, die ein Einzelbild des Stereovideos bilden, und die Bilder der Anzeigesteuervorrichtung zuführt.

13. Anzeigesteuerverfahren, das durch eine Anzeigesteuervorrichtung (150) durchgeführt wird, die veranlasst, dass ein Anzeigebild für das linke Auge und ein Anzeigebild für das rechte Auge, die ein Einzelbild eines Videos bilden, jeweils in der linken und der rechten Region eines Anzeigefelds (122) angezeigt werden, das Verfahren umfassend: einen Schritt des abwechselnden Erzeugens von entweder dem Anzeigebild für das linke Auge oder dem Anzeigebild für das rechte Auge für jedes Einzelbild;
einen Schritt des Steuerns des Anzeigefelds, um entweder das Anzeigebild für das linke Auge in der linken Region oder das Anzeigebild für das rechte Auge in der rechten Region anzuzeigen; und einen Schritt des Steuerns des Anzeigefelds, um das Anzeigen eines Bilds durch den anderen der linken Region oder der rechten Region zu unterdrücken.

14. Computerprogramm zum Veranlassen eines Computers, der veranlasst, dass ein Anzeigebild für das linke Auge und ein Anzeigebild für das rechte Auge, die ein Einzelbild eines Videos bilden, jeweils in der linken und der rechten Region eines Anzeigefelds (122) angezeigt werden, das Verfahren nach Anspruch 13 zu implementieren.

## Revendications

1. Dispositif de commande d'affichage (150) qui amène une image d'affichage pour l'œil gauche et une image d'affichage pour l'œil droit d'une trame d'une vidéo à être affichées dans des régions gauche et droite d'un panneau d'affichage (122), respectivement, le dispositif de commande d'affichage comprenant :
une section de génération de données d'image (160) qui est configurée pour générer alternativement soit l'image d'affichage pour l'œil gauche, soit l'image d'affichage pour l'œil droit pour la trame ; et une section de commande de sortie qui est configurée pour :
commander le panneau d'affichage pour afficher soit l'image d'affichage pour l'œil gauche, soit l'image d'affichage pour l'œil droit dans l'une correspondante de la région gauche ou de la région droite ; et alors qu'aucune image n'est affichée dans l'autre région ; et
commander le panneau d'affichage pour empêcher l'autre de la région gauche ou de la région droite d'afficher une image.

2. Dispositif de commande d'affichage selon la revendication 1, comprenant en outre :
une section d'acquisition d'image photographiée qui acquiert des données concernant une vidéo stéréoscopique photographiée par une caméra stéréoscopique (110) depuis des points de vue gauche et droit, dans lequel, en utilisant alternativement une image photographiée de point de vue gauche et une image photographiée de point de vue droit constituant une trame de la vidéo stéréoscopique, la section de génération de données d'image génère alternativement l'image d'affichage pour l'œil gauche et l'image d'affichage pour l'œil droit.

3. Dispositif de commande d'affichage selon la revendication 2, dans lequel la section d'acquisition d'image photographiée acquiert alternativement l'image photographiée de point de vue gauche et l'image photographiée de point de vue droit constituant une trame de la vidéo stéréoscopique, et
la section de génération de données d'image génère les images d'affichage en utilisant les images photographiées acquises.

4. Dispositif de commande d'affichage selon la revendication 2 ou 3, comprenant en outre :
une section de stockage de régulation de correction (170) qui stocke, pour chaque pixel, une quantité de correction intégrée d'une pluralité de types de corrections nécessaires pour générer les images d'affichage à partir des images photographiées,
dans lequel la section de génération de données d'image génère les images d'affichage sans passer par le biais des images intermédiaires en corrigeant les images photographiées de la quantité de correction intégrée.

5. Dispositif de commande d'affichage selon l'une quelconque des revendications 2 à 4, dans lequel
lorsqu'une commutation est effectuée entre un état d'affichage simultané dans lequel l'image d'affichage pour l'œil gauche et l'image d'affichage pour l'œil droit sont affichées simultanément et un état d'affichage unilatéral dans lequel l'une ou l'autre de l'image d'affichage pour l'œil gauche et de l'image d'affichage pour l'œil droit est affichée,
la section de génération de données d'image définit un processus de fondu enchaîné consistant à diminuer progressivement la luminosité d'une image d'affichage d'avant commutation et à augmenter simultanément la luminosité d'une image d'affichage d'après commutation, et modifie la luminosité de manière alternée soit dans l'image d'affichage pour l'œil gauche, soit dans l'image d'affichage pour l'œil droit affichée dans l'état d'affichage simultané, pour chaque trame, avant de modifier la luminosité dans l'autre image, pour remplacer l'image ayant subi la modification de luminosité par une image devant être affichée dans l'état d'affichage unilatéral.

6. Dispositif de commande d'affichage selon la revendication 5, dans lequel, lors de la commutation d'affichage d'une image de contenu vers chaque image photographiée, la section de génération de données d'image commute l'état d'affichage simultané vers l'état d'affichage unilatéral.

7. Dispositif de commande d'affichage selon la revendication 5 ou 6, dans lequel,
lors de la commutation entre l'état d'affichage simultané et l'état d'affichage unilatéral, la section de génération de données d'image modifie une valeur de pixel sur les données des images d'affichage dans le temps conformément à une règle de variation linéaire de la luminosité d'affichage dans le temps.

8. Dispositif de commande d'affichage selon l'une quelconque des revendications 1 à 7, dans lequel la section de génération de données d'image rend une image supplémentaire indiquant des informations supplémentaires directement dans une région située dans une plage prédéterminée à partir d'un centre de chaque image d'affichage à laquelle une distorsion inverse a été appliquée compte tenu d'une distorsion d'une lentille d'oculaire pendant un temps de visualisation, après avoir appliqué une distorsion selon une
position par rapport à l'image supplémentaire.

9. Dispositif de commande d'affichage selon la revendication 8, comprenant en outre :
une section de stockage de données d'image supplémentaire (158) qui stocke, en tant que données de modèle pour l'image supplémentaire, des données concernant un plan comportant une pluralité de polygones ayant chacun au moins un sommet disposé dans une région interne du plan, dans lequel
la section de génération de données d'image rend l'image supplémentaire présentant une distorsion pour chacun des polygones sur la base des coordonnées de position du sommet défini sur un plan de chaque image d'affichage.

10. Dispositif de commande d'affichage selon la revendication 8 ou 9, dans lequel la section de génération de données d'image exclut, d'une cible devant être rendue, une région dans chaque image d'affichage qui doit être masquée par l'image supplémentaire.

11. Visiocasque (100) comprenant :
le dispositif de commande d'affichage (150) selon l'une quelconque des revendications 1 à 10 ;
une caméra stéréoscopique (110) qui photographie une vidéo stéréoscopique destinée à être affichée en tant qu'images d'affichage ; et le panneau d'affichage (122).

12. Visiocasque selon la revendication 11, dans lequel la caméra stéréoscopique photographie alternativement pour chaque trame une image du point de vue gauche et une image du point de vue droit constituant une trame de la vidéo stéréoscopique, et fournit les images au dispositif de commande d'affichage.

13. Procédé de commande d'affichage effectué par un dispositif de commande d'affichage (150) qui amène une image d'affichage pour l'œil gauche et une image d'affichage pour l'œil droit constituant une trame d'une vidéo à être affichées dans des régions gauche et droite d'un panneau d'affichage (122), respectivement, le procédé comprenant : une étape de génération alternée de l'une ou l'autre de l'image d'affichage pour l'œil gauche et de l'image d'affichage pour l'œil droit pour chaque trame ;
une étape de commande du panneau d'affichage pour afficher soit l'image d'affichage de l'œil gauche dans la région gauche, soit l'image d'affichage de l'œil droit dans la région droite ; et une étape de commande du panneau d'affichage pour empêcher l'autre de la région gauche ou de la région droite d'afficher une image.

14. Programme informatique pour amener un ordinateur, qui amène une image d'affichage pour l'œil gauche et une image d'affichage pour l'œil droit constituant une trame d'une vidéo à être affichées dans des régions gauche et droite d'un panneau d'affichage (122), respectivement, à mettre en œuvre le procédé de la revendication 13.
